# EUROPEAN PATENT APPLICATION

(11) **EP 2 224 349 A1**
(43) Date of publication of application: **01.09.2010**
(21) Application number: 09153623.5
(22) Date of filing: 25.02.2009
(51) Int. Cl.: G06F 17/30

(54) **Mobile wireless communications device to display a remaining content portion of a web article and associated methods**

(71) Applicant: RESEARCH IN MOTION LIMITED, Waterloo, Ontario N2L 3W8 (CA)
(72) Inventor: Wormald, Chris, Waterloo, Ontario N2V 1K8 (CA)
(74) Representative: Fennell, Gareth Charles

(57) **Abstract**

A mobile wireless communications device includes a processor cooperating with a wireless transceiver for displaying on a display a linking web page including a plurality of introductory content portions of linked web articles having hyperlinks associated therewith. User selection of a corresponding hyperlink for a given linked web article is permitted via at least one input device. Content of the given linked web article is searched to determine a remaining content portion after the introductory content portions. At least part of the remaining content portion is displayed on the display.

## Description

### Technical Field

The present disclosure relates to the field of mobile wireless communications devices and, more particularly, to mobile wireless devices to display linked web articles and associated methods.

### Background

The World Wide Web has become a service platform that competes with traditional media, such as newspapers and magazines, for timely content publication, aggregation, and delivery. Such content may be delivered via a web page, for example. Other such content may be delivered via a RSS (Really Simple Syndication) feed. RSS is a type of web feed allowing the broadcast, or syndication, of content that is frequently updated, such as blog entries, news headlines, audio, and video, in a standardized format. An RSS document (which is also called a "feed," "web feed," or "channel") includes full or summarized text, plus metadata such as publishing dates and authorship. RSS feeds benefit publishers by letting them syndicate content quickly and automatically. They benefit readers who want to subscribe to timely updates from favored websites.

A standardized XML (Extensible Markup Language) file format allows the information to be published once via an RSS feed and viewed by many different programs. The RSS feed may be subscribed to and viewed with a web browser or a specific web feed reader. The web browser or feed reader checks the user's subscribed feeds regularly, downloads any updates that it finds, and provides a user interface to monitor and read the feeds.

The display of web pages and web feeds on a mobile wireless communications device has become desirable. However, the display of such on a mobile wireless communications device presents challenges not present in the display of web pages or web feeds on a traditional personal computer, such as a laptop. A mobile wireless communications device typically has a small screen with a limited viewing area. Therefore, a user of a mobile wireless communications device may be required to scroll through a large amount of advertisements or other information on a web page or web feed before reaching the content (e.g. a news article) that he wishes to read. Furthermore, a mobile wireless communications device may have an Internet connection that is relatively slow in comparison to an internet connection used by a personal computer.

Such user annoyances may arise when a user browsing a linking web page chooses a linked web article he would like to read by selecting a hyperlink associated with the linked web article. Rather than displaying the content portion of the linked web article when the hyperlink is selected, a conventional mobile wireless communications device displays the entire linked web article itself, which may include advertisements or other undesired content.

One way to provide a web article that opens directly to its content portion (for ease of reading by a user of a mobile wireless communications device) is by embedding certain tags in the HTML or XML file of the web article. For example, if creating both a linking web page and a linked web article, a web author may embed an "anchor" tag in both the linking web page and the linked web article to facilitate such a function.

The HTML tag <a name="articlel">Mews Article 1</a> may be embedded at the place in the linked web article where the content portion thereof begins. Likewise, <a href="http://www.article1.com/main.html#article1">Read Article 1</a> may be embedded as a hyperlink on the linking web page. When a user clicks on the Read Article 1 hyperlink on the linking web page, the linked web article will be displayed on the user's mobile wireless communications device starting from the location of the anchor tag. Of course, this solution requires that the appropriate HTML or XML tags be embedded into the both the linking web page and the linked web article, and is of no help to users viewing sites without such features.

Accordingly, a need remains for a mobile wireless communications device that facilitates easy and quick reading of a linked web article.

### Brief Description of the Drawings

FIG. 1 is a schematic block diagram of a communications system including a mobile wireless communications device in accordance with the present embodiment.

FIG. 2 shows the mobile wireless communications device of FIG. 1. displaying a linking web page.

FIG. 3 shows the mobile wireless communications device of FIG. 1 displaying a content portion of a linked web article.

FIG. 4 shows the mobile wireless communications device of FIG. 1 displaying a content portion of a linked web article wherein the content portion has been scrolled upward on the display.

FIG. 5 is a flowchart of a method of displaying a linked web article on a mobile wireless communications device in accordance with the present embodiment.

FIG. 6 is a schematic block diagram illustrating exemplary components of a mobile wireless communications device in accordance of the present embodiment.

### Detailed Description

The present description is made with reference to the accompanying drawings, in which various embodiments are shown, However, many different embodiments may be used, and thus the description should not be construed as limited to the embodiments set forth herein. Rather, these embodiments are provided so that this disclosure will be thorough and complete. Like numbers refer to like elements throughout.

A mobile wireless communications device comprises at least one input device, a display, a wireless transceiver, and a processor cooperating with the wireless transceiver. The processor may be for displaying on the display a linking web page including a plurality of introductory content portions of linked web articles having hyperlinks associated therewith. The processor may also be for permitting user selection of a corresponding hyperlink for a given linked web article via the at least one input device. In addition, the processor may be for searching content of the given linked web article to determine a remaining content portion after the introductory content portion, and displaying on the display at least part of the remaining content portion.

The linking web page may comprise a markup language file stored on a remote server and the linked web articles may comprise markup language files stored on remote web servers. Furthermore, the processor may search the markup language file of the given linked web article when searching content of the given linked web article.

The markup language file of the linking web page may comprise at least one of an HTML file and an XML file. Also, the markup language files of the linked web articles may each comprise at least one of an HTML file and an XML file.

The processor may further download a fraction of the remaining content portion from a remote server at a given time. Moreover, the processor may further download successive fractions of the remaining content portion from a remote server based upon the at least one input device.

The at least one input device may comprise a scrolling input device. The linked web articles may comprise web feeds and/or the linking web page may comprise a web feed aggregator page. The mobile wireless communications device may have a portable housing carrying the at least one input device, the display, the wireless transceiver, and the processor.

Another aspect is directed to a method of displaying a linked web article on a mobile wireless communications device. The method may comprise displaying on a display of the mobile wireless communications device a linking web page including a plurality of introductory content portions of linked web articles having hyperlinks associated therewith. User selection of a corresponding hyperlink for a given linked web article may be permitted via at least one input device of the mobile wireless communications device. Content of the given linked web article may be searched to determine a remaining content portion after the introductory content portion. At least part of the remaining content portion may be displayed on the display.

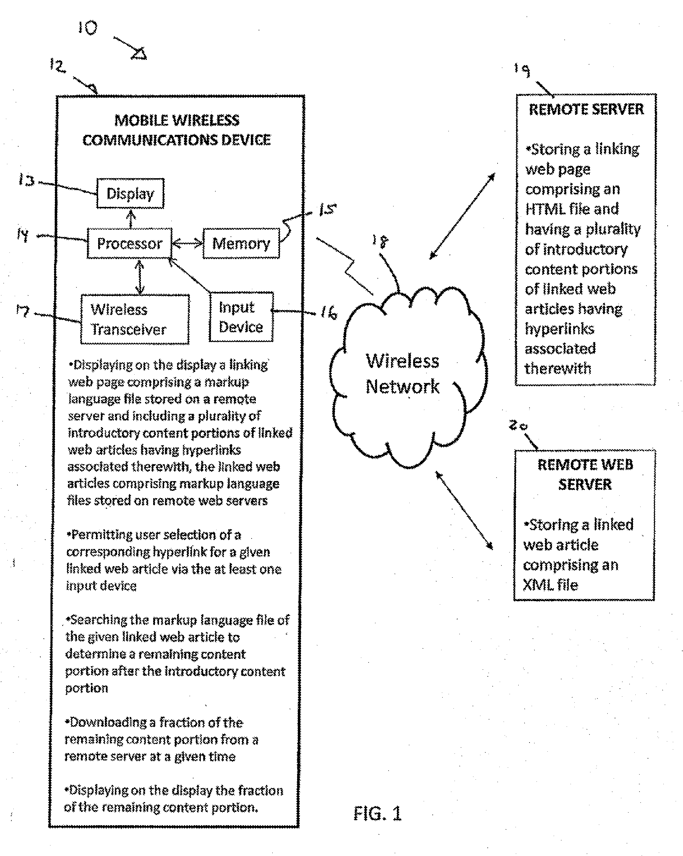

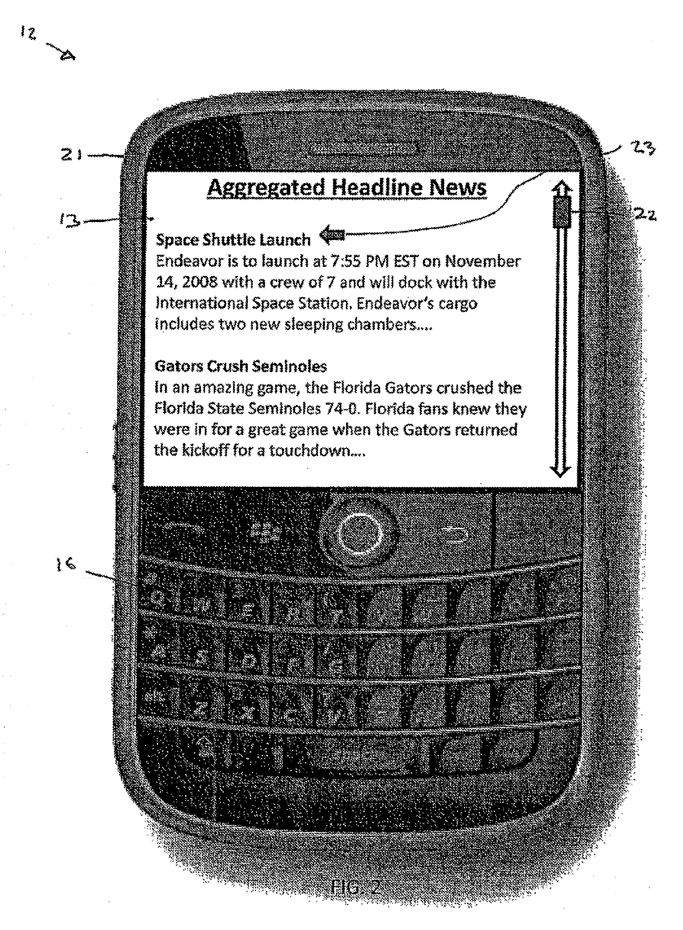

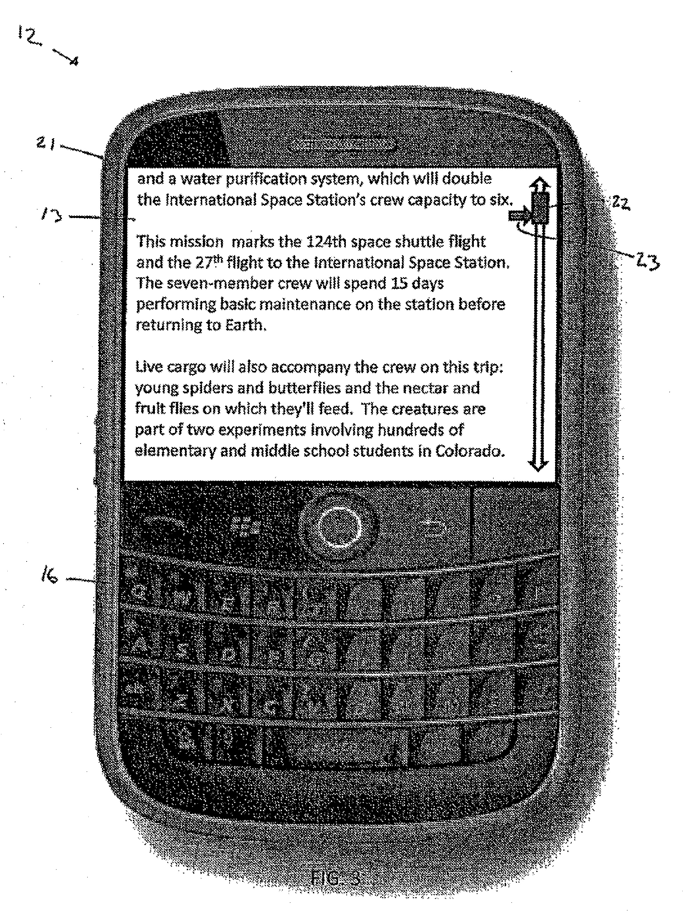

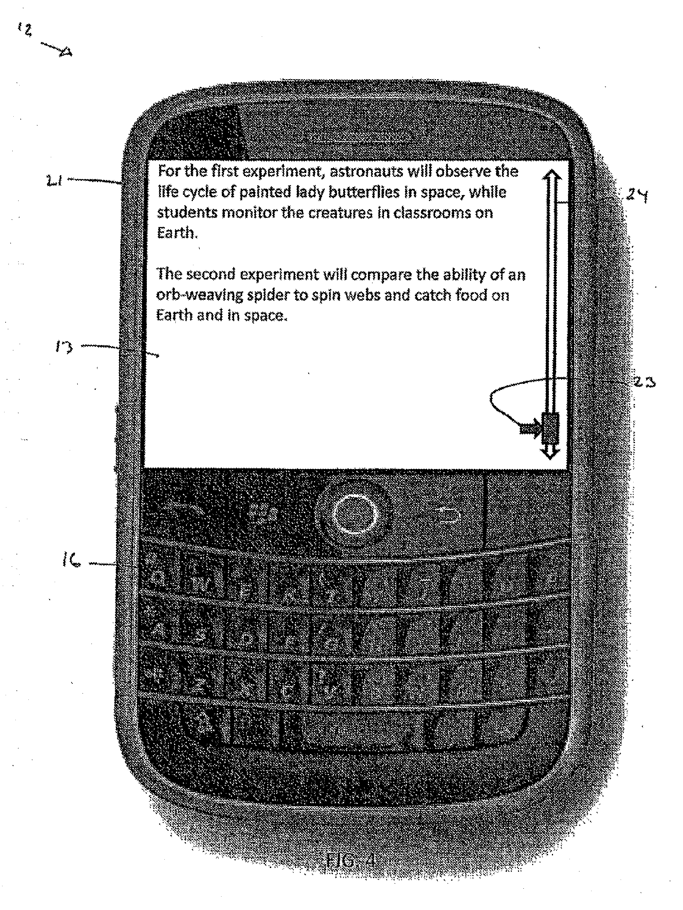

With reference to FIG. 1 a communications system **10** including a mobile wireless communications device **12** to display a linked web article is now described. Of course, there may be a plurality of mobile wireless communications devices **12.** The system **10** includes a wireless network **18** that may typically be provided by a cellular telephone network. The mobile wireless communications device **10** comprises a processor **14** coupled to a display **13,** a memory **15,** a wireless transceiver **17,** and an input device **16.** The input device **16** is illustratively a keyboard, for example. The input device **16** may also be a microphone or a wireless receiver, as will be appreciated by those of skill in the art. Of course, the display **13** may be a touch sensitive screen and may therefore also serve as the input device **16,** In addition, the mobile wireless communications device **10** includes a portable housing **21** and a rechargeable battery (not shown).

The processor **14** cooperates with the memory **15** and the wireless transceiver **17** for communicating with remote server **19** and remote web server **20.** The remote server **19** illustratively stores a linking web page comprising a HTML file but, of course, the linking web page may comprise any markup language file. The linking web page has a plurality of introductory content portions of linked web articles having hyperlinks associated therewith. The remote web server **20** stores the linked web articles which comprise XML files. It should be recognized that the linked web articles need not comprise XML files and, indeed, may comprise any suitable markup language files. It should be noted that the remote server **19** and the remote web server **20** may store any number of linking web pages and linked web articles, respectively.

The processor **14** of the mobile wireless communications device **10** cooperates with the memory **15** and the wireless transceiver **17** for displaying on the display **13** the linking web page, including the plurality of introductory content portions of linked web articles and the hyperlinks associated therewith.

User selection of a corresponding hyperlink for a given linked web article is permitted via the keyboard **16.** That is, a user may select the hyperlink associated with a given linked web article he would like to read. The processor **14** of the mobile wireless communications devices **10** cooperates with the memory **15** and the wireless transceiver **17** for searching content of the given linked web article to determine a remaining content portion after the introductory content portion. To search the content of the given linked web article, the processor **14** searches the XML file of the given linked web article.

A fraction of the remaining content portion is downloaded from the remote web server **20** at a given time. The fraction of the remaining content portion is displayed on the display **13.** Downloading a fraction of the remaining content portion art a given time permits the mobile wireless communications device **10** to display the content to the user more quickly.

Furthermore, the display of the remaining content portion on the display **13** has advantageously skipped over the introductory portion of the linked web article which a user will have already read. Further, undesirable portions of the linked web article that are above the remaining content portion will be skipped and not displayed to the user. This may greatly enhance the user experience, as reading linked web articles on conventional mobile wireless communications devices may require a user to scroll or skip through large portions of the linked web article to find the remaining content portion. Of course, the entire remaining content portion may, alternatively, be downloaded from the remote web server **20** at a given time and may be displayed on the display **13.**

Operation of the mobile wireless communications device **10** is now further described by way of example with reference to FIGS. 2-3. As shown in FIG. 2, the mobile wireless communications device **10** is displaying a web feed aggregator page having a plurality of introductory content portions of linked web articles thereon. In this example, the articles are illustratively "Space Shuttle Launch" and "Gators Crush Seminoles." Each of the articles has an introductory content portion displayed below and the article titles themselves are hyperlinks. As also shown in FIG. 2, the user has illustratively selected the hyperlink associated with the linked web article "Space Shuttle Launch" by using the input device. The arrow **23** next to the hyperlink shows the user selection.

The introductory portion of this linked web article states that "Endeavor is to launch at 7:55 PM EST on November 14, 2008 with a crew of 7 and will dock with the International Space Station. Endeavor's cargo includes two new sleeping chambers... ." Shown in FIG. 3 are the results of the user selecting the hyperlink associated with this linked web article. A fraction of the remaining content portion of the linked web article itself is now displayed on the display **13.** It should be noted that the fraction of the remaining content portion continues directly from where the introductory portion left off and recites "and a water purification system, which will double the International Space Station's crew capacity to six," which completes the sentence of the introductory portion.

The processor **14** further downloads successive fractions of the remaining content portion from the remote web server **20** based upon the keyboard **16.** The processor **14** downloads fractions of the remaining content portion at a time so that the linked web article may be displayed to the user more quickly, Furthermore, bandwidth of the wireless network **18** may be conserved because fractions of the linked web article may never be downloaded (if a user never scrolls the display **13** thereto).

As shown in FIG. 4, the user has illustratively used the keyboard **16** to move the pointer **23** to a scroll bar **24** and has used the scroll bar to scroll the content portion displayed on the display **13** upwardly. A successive fraction of the remaining content portion of the linked web article has been downloaded and is now displayed on the display **13.**

This use of the keyboard **16** to advance the content portion displayed on the display **13** using a scroll bar **24** makes the keyboard a scrolling input device. Additionally or alternatively to the scroll bar **24,** the user may use the keyboard **16** to skip to a next page of the web article. Of course, the mobile wireless communications device **10** may have additional input devices **16,** such as a trackball or thumbwheel.

It should be noted that the linking web page displayed by the display **13** in FIG. 2 is a web feed aggregator page and that the linked web articles are web feeds. Of course, in other applications, the linking web page may instead be a mere web page and not a web feed aggregator page. Similarly, the linked web articles need not be web feeds and instead may be web pages.

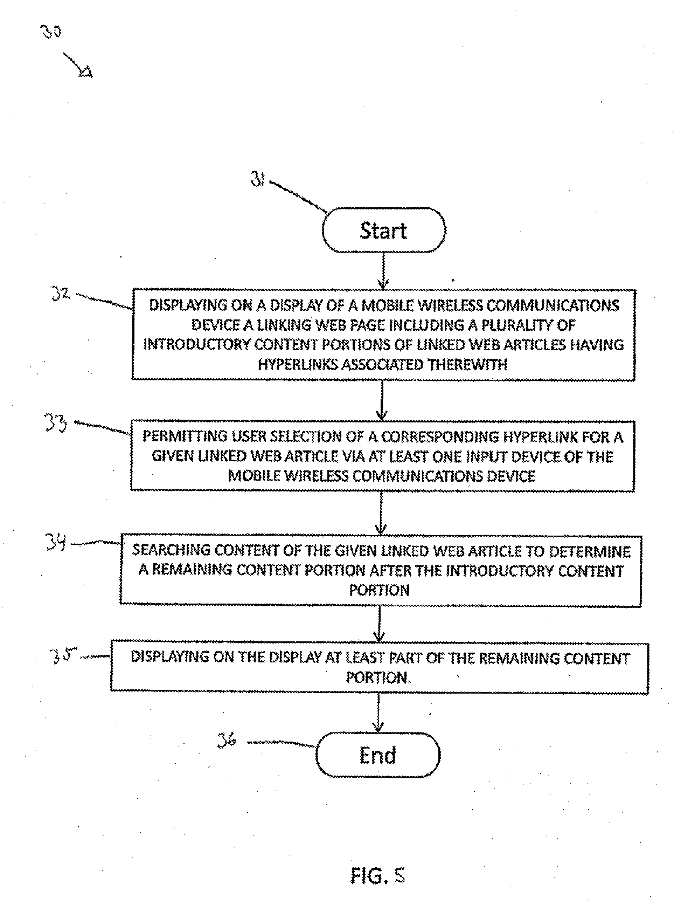

With reference to flowchart **30** of FIG. 5, a method of displaying a linked web article on a mobile wireless communications device is now described. After the start (Block **31**), at Block **32** a linking web page including a plurality of introductory content portions of linked web articles having hyperlinks associated therewith is displayed on a display of the mobile wireless communications device. At Block **33,** user selection of a corresponding hyperlink for a given linked web article is permitted via at least one input device of the mobile wireless communications device.

At Block **34**, content of the given linked web article is searched to determine a remaining content portion after the introductory content portion. At Block **35**, at least part of the remaining content portion is displayed on the display. Block **36** indicates the end of the method.

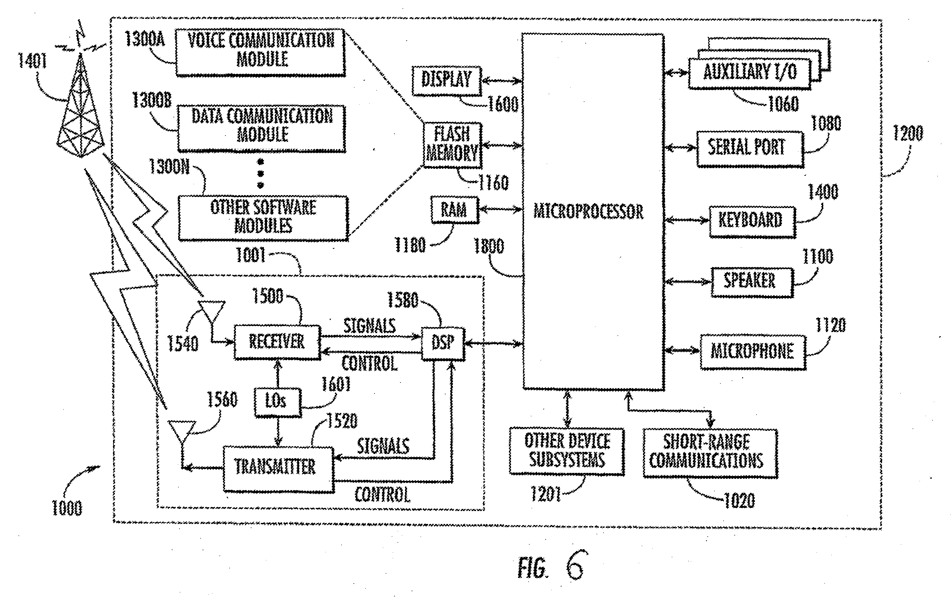

Exemplary components of a hand-held mobile wireless communications device **1000** that may be used in accordance with the present invention are further described in the example below with reference to FIG. 6. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000.** A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem 1001 also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna 1560.

In addition to processing communications signals, the DSP **1580** provides for control of the receiver **1500** and the transmitter **1520.** For example, gains applied to communications signals in the receiver **1500** and transmitter **1520** may be adoptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device comprising;
at least one input device;
a display;
a wireless transceiver; and
a processor cooperating with said wireless transceiver for
displaying on said display a linking web page including a plurality of introductory content portions of linked web articles having hyperlinks associated therewith,
permitting user selection of a corresponding hyperlink for a given linked web article via said at least one input device,
searching content of the given linked web article to determine a remaining content portion after the introductory content portion, and
displaying on said display at least part of the remaining content portion.

2. The mobile wireless device of Claim 1 wherein the linking web page comprises a markup language file stored on a remote server; wherein the linked web articles comprise markup language files stored on remote web servers; and wherein said processor searches the markup language file of the given linked web article when searching content of the given linked web article.

3. The mobile wireless communications device of Claim 2 wherein the markup language file of the linking web page comprises at least one of an HTML file and an XML file.

4. The mobile wireless communications device of Claim 2 wherein the markup language files of the linked web articles each comprises at least one of an HTML file and an XML file.

5. The mobile wireless communications device of Claim 1 wherein said processor further downloads a fraction of the remaining content portion from a remote web server at a given time.

6. The mobile wireless communications device of Claim 1 wherein said processor further downloads successive fractions of the remaining content portion from a remote web server based upon said at least one input device.

7. The mobile wireless communications device of Claim 6 wherein said at least one input device comprises a scrolling input device.

8. The mobile wireless communications device of Claim 1 wherein the linked web articles comprise web feeds.

9. The mobile wireless communications device of Claim 1 wherein the linking web page comprises a web feed aggregator page.

10. The mobile wireless communications device of Claim 1 further comprising a portable housing carrying said at least one input device, said display, wireless transceiver and said processor.

11. A method of displaying a linked web article on a mobile wireless communications device comprising:
displaying on a display of the mobile wireless communications device a linking web page including a plurality of introductory content portions of linked web articles having hyperlinks associated therewith;
permitting user selection of a corresponding hyperlink for a given linked web article via at least one input device of the mobile wireless communications device;
searching content of the given linked web article to determine a remaining content portion after the introductory content portion; and
displaying on the display at least part of the remaining content portion.

12. The method of Claim 11 wherein the linking web page comprises a markup language file stored on a remote server; wherein the linked web articles comprise markup language files stored on remote web servers; and wherein the markup language file of the given linked web article is searched when searching content of the given linked web article.

13. The method of Claim 11 further comprising downloading a fraction of the remaining content portion from a remote server at a given time.

14. The method of Claim 11 further comprising downloading successive fractions of the remaining content portion from a remote server based upon the at least one input device.

15. The method of Claim 11 wherein the linking web page comprises a web feed aggregator page.

## Amended claims

### Amended claims in accordance with Rule 137(2) EPC.

**1.** A mobile wireless communications device (12) comprising:
at least one input device (16) ;
a display (13) ;
a wireless transceiver (17); and
a processor (14) cooperating with said wireless transceiver for
displaying on said display a linking web page including a plurality of introductory content portions of linked web articles having hyperlinks associated therewith,
permitting user selection of a corresponding hyperlink for a given linked web article via said at least one input device,
searching content of the given linked web article to determine a remaining content portion after the introductory content portion, and
displaying on said display at least part of the remaining content portion.

**2.** The mobile wireless communications device of Claim 1 wherein the linking web page comprises a markup language file stored on a remote server; wherein the linked web articles comprise markup language files stored on remote web servers; and wherein said processor searches the markup language file of the given linked web article when searching content of the given linked web article.

**3.** The mobile wireless communications device of Claim 2 wherein the markup language file of the linking web page comprises at least one of an HTML file and an XML file.

**4.** The mobile wireless communications device of Claim 2 wherein the markup language files of the linked web articles each comprises at least one of an HTML file and an XML file.

**5.** The mobile wireless communications device of Claim 1 wherein said processor further downloads a fraction of the remaining content portion from a remote web server at a given time.

**6.** The mobile wireless communications device of Claim 1 wherein said processor further downloads successive fractions of the remaining content portion from a remote web server based upon said at least one input device.

**7.** The mobile wireless communications device of Claim 6 wherein said at least one input device comprises a scrolling input device.

**8.** The mobile wireless communications device of Claim 1 wherein the linked web articles comprise web feeds.

**9.** The mobile wireless communications device of Claim 1 wherein the linking web page comprises a web feed aggregator page.

**10.** The mobile wireless communications device of Claim 1 further comprising a portable housing carrying said at least one input device, said display, wireless transceiver and said processor.

**11.** A method of displaying a linked web article on a mobile wireless communications device (12) comprising:
displaying on a display (13) of the mobile wireless communications device a linking web page including a plurality of introductory content portions of linked web articles having hyperlinks associated therewith;
permitting user selection of a corresponding hyperlink for a given linked web article via at least one input device of the mobile wireless communications device;
searching content of the given linked web article to determine a remaining content portion after the introductory content portion; and
displaying on the display at least part of the remaining content portion.

**12.** The method of Claim 11 wherein the linking web page comprises a markup language file stored on a remote server; wherein the linked web articles comprise markup language files stored on remote web servers; and wherein the markup language file of the given linked web article is searched when searching content of the given linked web article.

**13.** The method of Claim 11 further comprising downloading a fraction of the remaining content portion from a remote server at a given time.

**14.** The method of Claim 11 further comprising downloading successive fractions of the remaining content portion from a remote server based upon the at least one input device.

**15.** The method of Claim 11 wherein the linking web page comprises a web feed aggregator page.
